# EUROPÄISCHE PATENTANMELDUNG

(11) **EP 4 269 945 A1**
(43) Veröffentlichungstag der Anmeldung: **01.11.2023**
(21) Anmeldenummer: 23170265.5
(22) Anmeldetag: 27.04.2023
(51) Int. Cl.: G01C 21/20, B64C 39/02, G05D 1/10, H04W 4/021

(54) **VERFAHREN UND SYSTEM ZUR FLUGBAHNSTEUERUNG BEI EINEM FLUGGERÄT**

(30) Priorität: 28.04.2022 DE 102022110343
(71) Anmelder: Volocopter GmbH, 76646 Bruchsal (DE)
(72) Erfinder: ORTLIEB, Markus, 76227 Karlsruhe (DE); HAUBER, Sonja, 74343 Sachsenheim (DE)
(74) Vertreter: LBP Lemcke, Brommer & Partner Patentanwälte mbB

(57) **Zusammenfassung**

Vorgeschlagen wird ein Verfahren zur Flugbahnsteuerung bei einem Fluggerät (1), insbesondere einem unbemannten Fluggerät (1), bei dem Grenzen eines für eine Mission des Fluggeräts (1) freigegebenen Luftraums bestimmt werden, welche Grenzen
a) zumindest eine harte Grenze (4a) umfassen, die einen für das Fluggerät
(1) verbotenen Bereich begrenzt, sowie zusätzlich
b1) eine Warngrenze (2a), bei deren Erreichen durch das Fluggerät (1) Sicherheitsmaßnahmen eingeleitet werden, und/oder
b2) eine weiche Grenze (3a), bei deren Erreichen durch das Fluggerät (1) Notfallmaßnahmen eingeleitet werden,
dadurch gekennzeichnet, dass
zur Berechnung einer Lage der Warngrenze (2a) und/oder der weichen Grenze (3a), vorzugsweise ausgehend von der harten Grenze (4a), Parameter eines tatsächlichen Flugzustandes des Fluggeräts (1), wie eine aktuelle Geschwindigkeit, eine aktuelle Flughöhe, ein aktueller Bahnwinkel oder andere aktuelle Faktoren, insbesondere Umweltfaktoren, z.B. Wind- und/oder Wetterbedingungen, durch eine rechnergestützte Flugbahnsteuerungseinheit des Fluggeräts (1) und/oder durch eine externe, rechnergestützte Flugbahnsteuerungseinheit laufend ermittelt und dynamisch berücksichtigt werden; und
anschließend durch die rechnergestützte Flugbahnsteuerungseinheit des Fluggeräts (1) und/oder durch die externe, rechnergestützte Flugbahnsteuerungseinheit überprüft wird, ob das Fluggerät (1) an seiner aktuellen Position mit den genannten Parametern gegenwärtig oder zukünftig wenigstens eine der genannten Grenzen (2a-4a) verletzt.

## Beschreibung

Die Erfindung betrifft ein Verfahren zur Flugbahnsteuerung bei einem Fluggerät nach dem Oberbegriff des Anspruchs 1, insbesondere einem unbemannten Fluggerät, bei dem Grenzen eines für eine Mission des Fluggeräts freigegebenen Luftraums bestimmt werden, welche Grenzen a) zumindest eine harte Grenze umfassen, die einen für das Fluggerät verbotenen Bereich begrenzt, sowie zusätzlich b1) eine Warngrenze, bei deren Erreichen durch das Fluggerät Sicherheitsmaßnahmen eingeleitet werden, und/oder b2) eine weiche Grenze, bei deren Erreichen durch das Fluggerät Notfallmaßnahmen eingeleitet werden.

Die Erfindung betrifft weiterhin ein Flugbahnsteuerungssystem bei einem Fluggerät, insbesondere einem unbemannten Fluggerät, welches Flugbahnsteuerungssystem dazu ausgebildet ist, Grenzen eines für eine Mission des Fluggeräts freigegebenen Luftraums zu bestimmen, welche Grenzen a) zumindest eine harte Grenze umfassen, die einen für das Fluggerät verbotenen Bereich begrenzt, sowie zusätzlich b1) eine Warngrenze, bei deren Erreichen durch das Fluggerät Sicherheitsmaßnahmen eingeleitet werden, und/oder b2) eine weiche Grenze, bei deren Erreichen durch das Fluggerät Notfallmaßnahmen eingeleitet werden, gemäß dem Oberbegriff des Anspruchs 13.

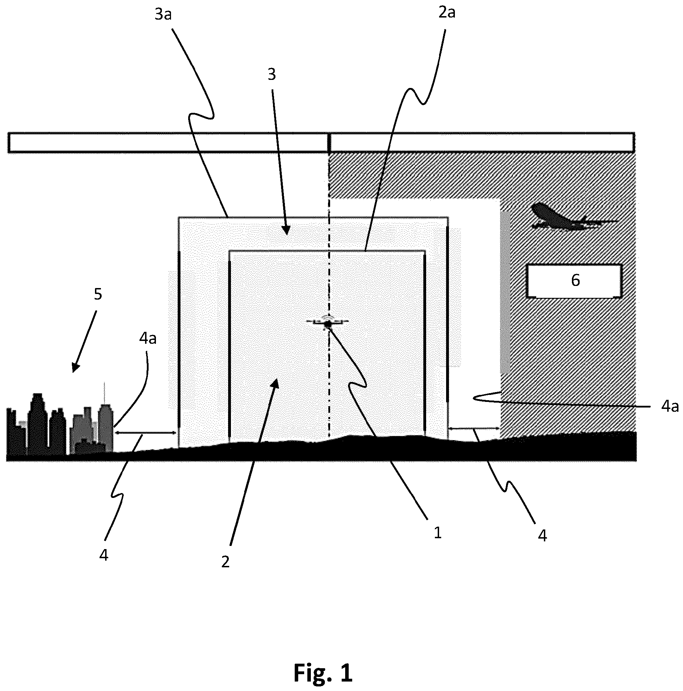

Speziell für den Betrieb von UAVs ("unmanned aerial vehicles" - unbemannte Fluggeräte) werden in Europa Grenzen des für eine Mission, d.h. für einen Flug freigegebenen Luftraums anhand quantitativer Berechnungsverfahren definiert. Diese vorbekannten Verfahren nutzen statische Volumina, die anhand konservativer Annahmen berechnet werden. Der gesamte Missionsumfang muss innerhalb eines sogenannten Risikopuffers ("Risk Buffers") verbleiben und darf sogenannte benachbarte Gebiete ("adjacent areas") nicht verletzen. Daraus ergeben sich bestimmte Grenzen, an welchen Grenzen Contingency-Verfahren (oder Sicherheitsmaßnahmen) bzw. Emergency-Verfahren (oder Notfallmaßnahmen) jeweils spätestens ausgelöst werden müssen, was regelmäßig automatisiert geschieht (vgl. die Darstellung in Figur 1). Die Grenze, an der eine "Contingency Procedure", also eine Sicherheitsmaßnahme gestartet wird, wird im Folgenden "Warning Boundary" oder Warngrenze genannt. Eine sogenannte "Soft Boundary" oder weiche Grenze beschreibt diejenige Grenze, bei der "Emergency Procedures" bzw. Notfallmaßnahmen eingeleitet werden. Diejenige (bevorzugt horizontale) Grenze, welche die bereits erwähnten "adjacent areas" (benachbarte Gebiete) schützt, wird als "Hard Boundary" oder harte Grenze bezeichnet.

Nachfolgend wird innerhalb der vorliegenden Beschreibung nicht zwischen UAVs und sonstigen Fluggeräten unterschieden, weil die Erfindung grundsätzlich auf alle Arten von Fluggeräten anwendbar ist. Sie ist allerdings besonders für die Verwendung in unbemannten Fluggeräten prädestiniert, weil dort natürlicherweise kein Pilot existiert, der im Gefahrenfall korrigierend auf die Flugbahn des Fluggeräts einwirken könnte.

Die beschriebene Funktionalität dient dazu, einen sogenannten "Geocage", also ein bestimmtes Volumen bzw. einen entsprechenden Luftraum zu definieren, welches Volumen das UAV nicht verlassen kann (vergleiche Figur 1), oder einen sogenannten "Geofence", wobei es sich umgekehrt um ein Volumen handelt, in welches das Fluggerät nicht eindringen kann. Im Folgenden werden zur Vereinfachung der Darstellung in Einzelfällen die horizontalen und vertikalen Grenzen der genannten Volumina getrennt betrachtet. Der Fokus liegt dabei auf den horizontalen Grenzen. Im Allgemeinen ist aber auch eine kombinierte Betrachtung möglich bzw. die Betrachtung lässt sich jeweils ohne Weiteres auch auf die vertikalen Grenzen übertragen.

Die Verwendung der vorstehend beschriebenen, vorbekannten Geocaging- und Geofencing-Methoden mit statischen Flugbereichsgrenzen führt dazu, dass in vielen angenommenen Flugzuständen die sogenannte "Flight Geography", also das eigentliche für die Mission zur Verfügung stehende Volumen kleiner ist, als dies für den betreffenden Flugzustand eigentlich erforderlich wäre. Dadurch ist der Missionsumfang in nachteiliger Weise unnötig eingeschränkt, und Abhilfemaßnahmen müssen eingeleitet werden, bevor dies flugphysikalisch erforderlich ist. In der Konsequenz können z.B. Gebiete mit schmalen Passagen eventuell gar nicht oder nur sehr langsam beflogen werden - insbesondere, wenn es sich um Fluggeräte/UAVs mit trägen Leistungscharakteristiken handelt.

Der Erfindung liegt die Aufgabe zugrunde, ein Verfahren und ein System der weiter oben genannten Art jeweils so weiterzuentwickeln, dass keine unnötige Beschränkung des Missionsumfangs erfolgt, wodurch auch schwierige Gebiete für Fluggeräte zugänglich werden, insbesondere auch mit erhöhter Fluggeschwindigkeit.

Diese Aufgabe wird erfindungsgemäß gelöst durch ein Verfahren mit den Merkmalen des Patentanspruchs 1 sowie durch ein System mit den Merkmalen des Patentanspruchs 13.

Vorteilhafte Weiterbildungen der erfindungsgemäßen Idee sind in den jeweiligen Unteransprüchen definiert.

Eine bevorzugte Verwendung des erfindungsgemäßen Verfahrens bzw. des erfindungsgemäßen Flugbahn Steuerungssystems betrifft ein Fluggerät, insbesondere ein unbemanntes Fluggerät (UAV), das mittels eines erfindungsgemäßen Verfahrens gesteuert wird und/oder das mit einem erfindungsgemäßen Flugbahnsteuerungssystem ausgerüstet ist.

Ein erfindungsgemäßes Verfahren zur Flugbahnsteuerung bei einem Fluggerät, insbesondere einem unbemannten Fluggerät, bei dem Grenzen eines für eine Mission des Fluggeräts freigegebenen Luftraums bestimmt werden, welche Grenzen a) zumindest eine harte Grenze umfassen, die einen für das Fluggerät verbotenen Bereich begrenzt, sowie zusätzlich b1) eine Warngrenze, bei deren Erreichen durch das Fluggerät Sicherheitsmaßnahmen eingeleitet werden, und/oder b2) eine weiche Grenze, bei deren Erreichen durch das Fluggerät Notfallmaßnahmen eingeleitet werden, ist dadurch gekennzeichnet, dass zur Berechnung einer Lage der Warngrenze und/oder der weichen Grenze, vorzugsweise ausgehend von der harten Grenze, Parameter eines tatsächlichen Flugzustandes des Fluggeräts, wie eine aktuelle Geschwindigkeit, eine aktuelle Flughöhe, ein aktueller Bahnwinkel oder andere aktuelle Faktoren, insbesondere Umweltfaktoren, z.B. Wind- und/oder Wetterbedingungen, durch eine rechnergestützte Flugbahnsteuerungseinheit des Fluggeräts und/oder durch eine externe, rechnergestützte Flugbahnsteuerungseinheit laufend ermittelt und dynamisch berücksichtigt werden; und dass anschließend durch die rechnergestützte Flugbahnsteuerungseinheit des Fluggeräts und/oder durch die externe, rechnergestützte Flugbahnsteuerungseinheit überprüft wird, ob das Fluggerät an seiner aktuellen Position mit den genannten Parametern gegenwärtig oder zukünftig wenigstens eine der genannten Grenzen verletzt. Dann können - vorzugsweise automatisch - entsprechende Gegenmaßnahmen ergriffen werden. Insbesondere kann eine Flugbahn des Fluggeräts verändert werden.

Auf diese Weise ermöglicht die Erfindung eine dynamische Flugbereichsskalierung. Weitere Einflussparameter, die in die Berechnung der dynamischen Flugbereichsskalierung einfließen können, sind z.B. Umweltfaktoren, wie der bereits erwähnte Wind, die Verfügbarkeit von Navigationssatelliten, eine Navigationsperformace (d.h. die Genauigkeit der Navigation) im Allgemeinen, oder maximale Höhenunterschiede eines überflogenen Geländes.

Aufgrund der vorgeschlagenen dynamischen Flugbereichsskalierung erfolgt erfindungsgemäß keine unnötige Beschränkung des Missionsumfangs, sodass auch schwierige Gebiete für Fluggeräte zugänglich werden, insbesondere auch mit erhöhter Fluggeschwindigkeit.

Ein zur Durchführung des erfindungsgemäßen Verfahrens geeignetes erfindungsgemäßes Flugbahnsteuerungssystem bei einem Fluggerät, insbesondere einem unbemannten Fluggerät, welches Flugbahnsteuerungssystem dazu ausgebildet ist, Grenzen eines für eine Mission des Fluggeräts freigegebenen Luftraums zu bestimmen, welche Grenzen a) zumindest eine harte Grenze umfassen, die einen für das Fluggerät verbotenen Bereich begrenzt, sowie zusätzlich b1) eine Warngrenze, bei deren Erreichen durch das Fluggerät Sicherheitsmaßnahmen eingeleitet werden, und/oder b2) eine weiche Grenze, bei deren Erreichen durch das Fluggerät Notfallmaßnahmen eingeleitet werden, ist dadurch gekennzeichnet, dass das Flugbahnsteuerungssystem dazu ausgebildet ist, zur Berechnung einer Lage der Warngrenze und/oder der weichen Grenze, vorzugsweise ausgehend von der harten Grenze, Parameter eines tatsächlichen Flugzustandes des Fluggeräts, wie eine aktuelle Geschwindigkeit, eine aktuelle Flughöhe, ein aktueller Bahnwinkel oder andere aktuelle Faktoren, insbesondere Umweltfaktoren, z.B. Wind- und/oder Wetterbedingungen, insbesondere durch eine rechnergestützte Flugbahnsteuerungseinheit des Fluggeräts und/oder durch eine externe, rechnergestützte Flugbahnsteuerungseinheit laufend zu ermitteln und dynamisch zu berücksichtigen; wobei das Flugbahnsteuerungssystem weiterhin dazu ausgebildet ist, insbesondere durch die rechnergestützte Flugbahnsteuerungseinheit des Fluggeräts und/oder durch die externe, rechnergestützte Flugbahnsteuerungseinheit, zu überprüfen, ob das Fluggerät an seiner aktuellen Position mit den genannten Parametern gegenwärtig oder zukünftig wenigstens eine der genannten Grenzen verletzt und bei Bedarf entsprechende Steuerungsmaßnahmen für das Fluggerät einzuleiten.

Erfindungsgemäß werden demnach zur Berechnung der Soft Boundary und der Warning Boundary, d.h. der weichen Grenze und der Warngrenze nicht mehr konservative Annahmen getroffen, sondern Parameter des tatsächlichen Flugzustandes, wie die aktuelle Geschwindigkeit, die Flughöhe und/oder der Bahnwinkel des Fluggeräts oder andere Faktoren (z.B. Wetterbedingungen) berücksichtigt. Das führt dazu, dass aus den bislang statischen Volumina dynamisch veränderliche Volumina entstehen, deren Grenzen das physikalische Verhalten des Fluggeräts und seiner Umgebung zum jeweiligen Zeitpunkt der Gültigkeit repräsentieren. Ein langsam fliegendes UAV kann näher an eine Grenze heranfliegen, als dies mit den bisherigen Methoden möglich war, da "Contigency Procedures" (also Sicherheitsmaßnahmen der Art "Hover as soon as possible" - Gehe sobald wie möglich in den Schwebeflug, als mögliches Rettungsmanöver) bei geringeren Geschwindigkeiten weniger Raum für ihre Durchführung benötigen. Auch die "Emergency Procedures", also Notfallmaßnahmen, wie beispielsweise ein Flight Termination System, welches das UAV innerhalb der Risikopuffer-Zone gezielt zum Absturz bringt, können auf diese Weise das UAV innerhalb kürzerer Distanz zu Boden bringen.

Im Rahmen der vorliegenden Beschreibung wird grundsätzlich nicht zwischen den weiter oben bereits erwähnten Geocaging- und Geofencing-Methoden unterschieden, weil es erfindungsgemäß keine Rolle spielt, von welcher Seite sich ein Fluggerät einer definierten bzw. zu definierenden (Flugbereichs-) Grenze nähert.

Eine vorteilhafte Weiterbildung des erfindungsgemäßen Verfahrens sieht vor, dass ein Abstand zwischen der harten Grenze und der weichen Grenze und/oder zwischen der weichen Grenze und der Warngrenze an einem Ort innerhalb des Luftraums dynamisch von einer aktuellen Geschwindigkeit des Fluggeräts abhängt. Auf diese Weise hängt die Lage der Grenzen von der aktuellen Geschwindigkeit des Fluggeräts ab und muss nicht mehr konservativ (insbesondere nicht bezogen auf eine höchstmögliche Geschwindigkeit des Fluggeräts) abgeschätzt werden.

Eine andere vorteilhafte Weiterbildung des erfindungsgemäßen Verfahrens sieht außerdem vor, dass der Abstand mit zunehmender aktueller Geschwindigkeit des Fluggeräts größer wird und umgekehrt. Hierdurch wird berücksichtigt, dass ein schneller fliegendes Fluggerät auch eine größere Strecke überwinden wird, bevor eine Gegenmaßnahme ergriffen werden kann bzw. ihre Wirksamkeit zeigt.

In einer weiteren Ausgestaltung der Erfindung kann zusätzlich auch die Flugrichtung des UAVs berücksichtigt werden. Dadurch werden Volumina nicht mehr ungerichtet skaliert. Es hat sich nämlich gezeigt, dass eine ungerichtete Skalierung der Grenzen zu einer zusätzlichen konservativen Limitierung des Flugbereiches führt, die flugphysikalisch keine Relevanz hat und den zur Verfügung stehenden Luftraum über Gebühr einschränkt. Solche Grenzen, die in Flugrichtung liegen, können im Rahmen dieser Ausgestaltung kritischer eingestuft werden als Grenzen, die beispielsweise parallel oder entgegen der Flugrichtung liegen. Auf diese Weise kann ein parallel zur "Warning Boundary" bzw. Warngrenze fliegendes UAV dieser näher sein als ein frontal auf die Grenze zufliegendes UAV.

Entsprechend kann in Weiterbildung des erfindungsgemäßen Verfahrens vorgesehen sein, dass ein Abstand zwischen der harten Grenze und der weichen Grenze und/oder zwischen der weichen Grenze und der Warngrenze an einem Ort innerhalb des Luftraums dynamisch von einer aktuellen Flugrichtung des Fluggeräts relativ zu den genannten Grenzen abhängt.

Bei einer speziellen anderen Weiterbildung des erfindungsgemäßen Verfahrens kann außerdem noch vorgesehen sein, dass Grenzen, die in Flugrichtung liegen, in einem größeren Abstand von einem aktuellen Ort des Fluggeräts gesetzt werden als Grenzen, die parallel oder entgegen der Flugrichtung liegen.

Auf diese Weise lassen sich Volumina berechnen, die optimal an eine aktuelle Mission bzw. an einen gegebenen Flugzustand eines betreffenden Fluggeräts angepasst sind.

Eine besonders vorteilhafte Weiterbildung des erfindungsgemäßen Verfahrens sieht vor, dass die Grenzen festgelegt werden, indem: i) zunächst ein Verlauf der harten Grenze festgelegt wird; ii) dann abhängig von dem Flugzustand und vorzugsweise zusätzlich abhängig von Umweltfaktoren Distanzen *d_{cont}* und *dᵣᵢₛₖ* berechnet werden; iii) dann ein Verlauf der weichen Grenze und der Warngrenze festgelegt werden, indem ein Verlauf der harten Grenze zum Festlegen der weichen Grenze in einem Abstand *dᵣᵢₛₖ* und ein Verlauf der weichen Grenze zum Festlegen der Warngrenze in einem Abstand *d_{cont}* reproduziert wird. Alternativ kann zum Festlegen der Warngrenze die harte Grenze im Abstand *d_{cont}* + *dᵣᵢₛₖ* reproduziert werden. Eine solche Methode kann auch als Polygonskalierung bezeichnet werden. Vorzugsweise befindet sich dabei das Fluggerät innen, d.h. innerhalb eines die betreffende Grenze darstellenden Polygons.

Ganz allgemein wird vorzugsweise die Berechnung bzw. die Bestimmung einer Lage der Warngrenze und der weichen Grenze von einem tatsächlichen Flugzustand des Fluggeräts und gegebenenfalls weiteren Einflussfaktoren abhängig gemacht. Zu jedem Zeitpunkt t werden dafür die genannten Grenzen (weiche Grenze und Warngrenze) mittels analytischer Modelle aus der (regelmäßig fest vorgegebenen) harten Grenze abgeleitet. Die genannten analytischen Modelle berücksichtigen vorzugsweise u.a. die aktuelle Geschwindigkeit, worst-case-Verhalten des Fluggeräts bei Kontrollverlust, die erwartete Absturztrajektorie bei einer Flugterminierung und/oder Durchführbarkeit eines Recoverymanövers zum jeweiligen Zeitpunkt. Anschließend wird überprüft, ob die gegenwärtige Position des Fluggeräts diese Grenzen verletzt, und es werden bei Bedarf entsprechende Gegenmaßnahmen eingeleitet.

Im Rahmen der weiter oben beschriebenen einfachsten Ausgestaltung des erfindungsgemäßen Verfahrens können auch Verletzungen der Flugbereichsgrenzen in Richtungen berücksichtigt werden, die aus physikalischer Sicht nicht relevant oder nur mit sehr geringer Wahrscheinlichkeit relevant werden. Eine äußerst vorteilhafte andere Weiterbildung des erfindungsgemäßen Verfahrens sieht deshalb vor, dass eine Wahrscheinlichkeit der Verletzung einer Grenze an einem bestimmten Punkt durch das Fluggerät berechnet wird, indem eine Winkeldifferenz zwischen der betreffenden Grenze und einer aktuellen Flugrichtung des Fluggeräts berücksichtigt wird, wobei die Wahrscheinlichkeit mit zunehmender Winkeldifferenz zur aktuellen Flugrichtung abnimmt, welche Wahrscheinlichkeit zur dynamischen Berechnung einer Lage der Warngrenze und/oder der weichen Grenze verwendet wird.

Auf diese Weise lassen sich die Flugbereichsgrenzen noch besser an die aktuellen Gegebenheiten anpassen, wodurch der verfügbare Luftraum noch effizienter genutzt werden kann.

In Weiterbildung dieser Idee kann bei einem erfindungsgemäßen Verfahren außerdem noch vorgesehen sein, dass zur Berechnung der Grenzen eine euklidische Distanz zu einem geradlinigen Grenzabschnitt als eine stückweise kontinuierliche Funktion eines Richtungswinkels zwischen der aktuellen Flugrichtung und einem jeweiligen Punkt auf dem Grenzabschnitt beschrieben wird, wobei die resultierenden Abstandsfunktionen mit einer Gewichtungsfunktion skaliert werden, welche Gewichtungsfunktion die Wahrscheinlichkeit einer abrupten Richtungsänderung des Fluggeräts als Funktion des Richtungswinkels abbildet, woraus sich neue Distanzwerte ergeben, die sowohl die euklidische Distanz als auch die Wahrscheinlichkeit, dass die Grenze an dem jeweiligen Punkt verletzt wird, berücksichtigen.

Auf diese Weise lässt sich die Lage der Grenzen optimal an den gegenwärtigen Flugzustand des Fluggeräts anpassen.

Zwecks einer besonders einfachen und effizienten Implementierung des erfindungsgemäßen Verfahrens kann bei entsprechender Weiterbildung außerdem noch vorgesehen sein, dass die neuen Distanzwerte nach einem Minimum abgesucht werden und dann dieses Minimum mit den Distanzen *d_{cont}* und *dᵣᵢₛₖ* verglichen wird.

Eine besonders einfache Ausgestaltung ergibt sich, wenn vorzugsweise als Gewichtungsfunktion eine Gauß'sche Glockenkurve verwendet wird. Die Erfindung ist jedoch keinesfalls auf die Verwendung einer solchen Gewichtungsfunktion beschränkt. Beispielsweise kann bei einer anderen Weiterbildung des erfindungsgemäßen Verfahrens vorgesehen sein, dass die Gewichtungsfunktion auf der Grundlage empirischer Daten hergeleitet wird, welche Daten insbesondere physikalische Fähigkeiten des Fluggeräts zur Richtungsänderung im Extremfall abbilden.

Auf diese Weise lässt sich eine noch bessere Anpassung an die tatsächlichen Gegebenheiten erreichen.

Als besonders vorteilhaft hat es sich erwiesen, wenn im Zuge einer wieder anderen Weiterbildung des erfindungsgemäßen Verfahrens die auf Basis der Flugrichtung gewichtete Distanz zu den Grenzen als Grundlage für eine Entscheidung über die Einleitung von Steuerungsmaßnahmen für das Fluggerät verwendet wird. Auf diese Weise wird nur dann in den Flugablauf eingegriffen, wenn dies aufgrund der gegenwärtigen Lage unbedingt erforderlich ist.

Vorzugsweise ist das weiter oben beschriebene Flugbahnsteuerungssystem weiterhin ausgebildet zur Durchführung einer Ausgestaltung des erfindungsgemäßen Verfahrens.

Um ähnliche, richtungsabhängige Resultate zu erzielen, kann auch die bereits angesprochene Flächenskalierung (Polygonskalierung) hinsichtlich der Abstände des Fluggeräts zu den Grenzen gewichtet werden. Dieser Ansatz ist mit Blick auf den Rechenaufwand der vorstehend beschriebenen Methode möglicherweise unterlegen, dennoch aber vom Umfang der beschriebenen Erfindung abgedeckt.

Alternativ können Geocages auch anhand eines vorab definierten Flugpfades und einer daraus resultierenden Richtung hergeleitet und ähnlich eines "Tunnel in the Sky" implementiert werden.

Weitere Eigenschaften und Vorteile der Erfindung ergeben sich aus der nachfolgenden Beschreibung von Ausführungsbeispielen anhand der Zeichnung.
Figur 1 zeigt ein Fluggerät mit zugehörigen Mission-Luftraum zwecks Erläuterung der weiter oben eingeführten Begrifflichkeiten;
Figur 2 zeigt eine Ausgestaltung des erfindungsgemäßen Verfahrens basierend auf der Methode der Polygonskalierung;
Figur 3 illustriert grundsätzliche Überlegungen für die richtungsabhängige Gewichtung bzw. Bestimmung von Grenzen; und
Figur 4 zeigt eine mögliche Gewichtung der Abstandsfunktion mit einer exemplarischen Gewichtungsfunktion.

In Figur 1 ist bei Bezugszeichen 1 ein bevorzugt unbemanntes Fluggerät (UAV) innerhalb seines Mission-Luftraums 2 dargestellt. Um den Mission-Luftraum 2 herum ist das sogenannte Sicherheitsvolumen ("Contingency Volume") 3 angeordnet. Der Mission-Luftraum 2 und das Sicherheitsvolumen 3 bilden zusammen den sogenannten operativen Luftraum für das Fluggerät 1. Ein Verlassen des Mission-Luftraums 2 führt regelmäßig zur Einleitung von sog. Sicherheitsmaßnahmen, während ein Verlassen des Sicherheitsvolumens 3 zur Einleitung von sog. Notfallmaßnahmen führt. Außerhalb des Sicherheitsvolumens 3 ist jeweils noch eine Risiko-Pufferzone 4 zu einem benachbarten Gebiet 5 bzw. einem benachbarten Luftraum 6 definiert. Am Ende der Risiko-Pufferzone 4 liegt die sogenannte harte Grenze 4a. Die Grenze des Mission-Luftraums 2 gebildet durch die Warngrenze 2a, und die Grenze des Sicherheitsvolumens 3 wird gebildet durch die weiche Grenze 3a.

Das Fluggerät 1 umfasst vorzugsweise eine an Bord befindliche rechnergestützte Flugbahnsteuerungseinheit, die ein erfindungsgemäßes Flugbahnsteuerungssystem ausbildet, jedoch in Figur 1 aus Gründen der Übersichtlichkeit nicht dargestellt ist. Das Fluggerät 1 ist vorzugsweise in der Lage, seinen eigenen aktuellen Flugzustand, insbesondere die Flugrichtung, Flughöhe, Fluggeschwindigkeit und sonstige Parameter sensorisch, d.h. mittels geeigneter Sensoren (nicht gezeigt) zu bestimmen. Bevorzugt ist das Fluggerät 1 auch in der Lage, bestimmte Umgebungsparameter, wie die Windrichtung oder dergleichen, sensorisch, d.h. mittels geeigneter Sensoren (nicht gezeigt) zu bestimmen. Zusätzlich oder alternativ können die genannten Parameter dem Fluggerät 1 von extern mitgeteilt werden, beispielsweise von einer geeignet ausgestatteten Bodenstation (nicht gezeigt). Des Weiteren kann zusätzlich oder alternativ eine bodengestützte Flugbahnsteuerungseinheit (ebenfalls nicht gezeigt) für das UAV 1 zum Einsatz kommen.

Wenn das UAV 1 eine der genannten Grenzen 2a-4a erreicht, werden durch die Flugbahnsteuerungseinheit jeweils angepasste, abgestufte Maßnahmen (Flugmanöver) automatisch eingeleitet und durchgeführt.

Wie man der Figur 1 noch entnimmt, ist in Bezug auf den benachbarten Luftraum 6 auch in vertikaler Richtung, d.h. nach oben eine harte Grenze 4a definiert, während bezogen auf das benachbarte Gebiet 5 bzw. die dortige Bebauung regelmäßig nur eine horizontale harte Grenze 4a definiert zu werden braucht. Die Erfindung ist jedoch keinesfalls auf derartige Gegebenheiten beschränkt.

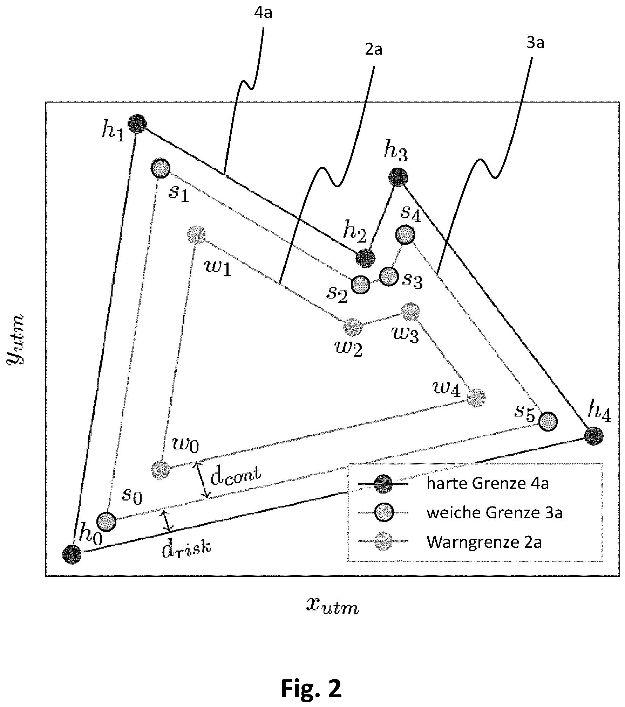

Figur 2 zeigt eine mögliche Implementierung des erfindungsgemäßen Verfahrens in Form einer sogenannten Polygonskalierung. Dargestellt sind horizontale Grenzen, wobei die beiden Koordinatenachsen entsprechende horizontale Entfernungen *xᵤₜₘ, yᵤₜₘ* angeben. Hierbei sind zunächst diejenigen Punkte bekannt bzw. vorgegeben, welche die harte Grenze 4a bilden (in Figur 2 durch dunkle Punkte symbolisiert, die mit h₀ bis h₄ bezeichnet sind). Abhängig von einem Flugzustand des Fluggeräts (nicht gezeigt) und gegebenenfalls möglichen bzw. bekannten Umweltfaktoren werden die in Figur 2 eingezeichneten Abstände bzw. Distanzen *d_{cont}* und *dᵣᵢₛₖ* berechnet, bevorzugt durch die erwähnte Flugbahnsteuerungseinheit(en), mit denen dann die "Soft Boundary" (weiche Grenze 3a) und die "Warning Boundary" (Warngrenze 2a) skaliert werden. *dᵣᵢₛₖ* bezeichnet den Abstand der weichen Grenze 3a (helle, umrandete Punkte s₀ bi s₅) von der harten Grenze 4a, und *d_{cont}* bezeichnet den Abstand der Warngrenze 2a (helle Punkte w₀ bis w₄) von der weichen Grenze 3a. Auf diese Weise ergeben sich eine Reihe von ähnlichen Polygonen. Anschließend wird geprüft, innerhalb welchen Polygons sich das Fluggerät befindet, und entsprechende Flugzustände werden gesetzt bzw. Flugsteuerungsmaßnahmen eingeleitet. Dies alles geschieht in oder durch eine rechnergestützte Flugbahnsteuerungseinheit des Fluggeräts und/oder durch eine externe rechnergestützte, vorzugsweise bodengestützte Flugbahnsteuerungseinheit (nicht gezeigt), wie bereits angemerkt wurde.

Wesentlich ist, dass die weiche Grenze 3a und die Warngrenze 2a nicht vor dem Flug festgelegt werden müssen, sondern dass sie während der Mission ständig und in Abhängigkeit von den aktuellen Gegebenheiten angepasst werden können.

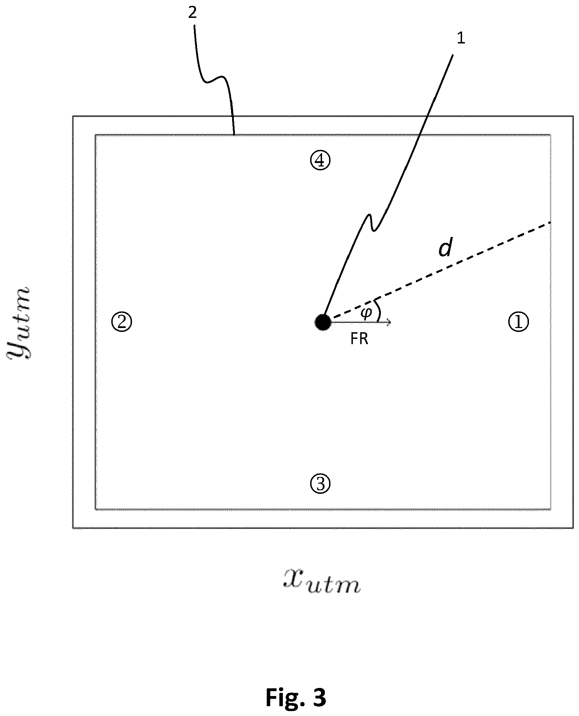

Während im Zuge der einfachsten Ausgestaltung des erfindungsgemäßen Verfahrens auch Verletzungen der Flugbereichsgrenzen in solchen Richtungen berücksichtigt werden, die aus physikalischer Sicht nicht relevant sind oder nur mit sehr geringer Wahrscheinlichkeit relevant werden, berücksichtigt eine vorteilhafte Weiterbildung des Verfahrens auch die Flugrichtung bei der Festlegung der Flugbereichsgrenzen. Diesem Ansatz liegt die Annahme zugrunde, dass die Wahrscheinlichkeit der Verletzung einer Flugbereichsgrenze an einem bestimmten Punkt des Geocages mit zunehmender Winkeldifferenz zur aktuellen Flugrichtung abnimmt. Figur 3 zeigt bei Bezugszeichen 1 ein UAV bzw. ein sonstiges Fluggerät bei gleichzeitiger Indikation der Flugrichtung FR in einem einfachen rechteckigen Geocage oder Mission-Luftraum 2, dessen Grenzen mit ① bis ④ bezeichnet sind. Obwohl das UAV 1 genau zentral innerhalb des Geocages 2 positioniert ist, wäre die Verletzung der Grenze ① deutlich wahrscheinlicher als eine Verletzung der Grenze ② (oder der Grenzen ③ und ④). Dies gilt entsprechend für alle Grenzen 2a-4a gemäß Figur 1. Dieser Unterschied wird bei einer entsprechenden Weiterbildung des erfindungsgemäßen Verfahrens, wie im einleitenden Teil der Beschreibung dargestellt, mit berücksichtigt.

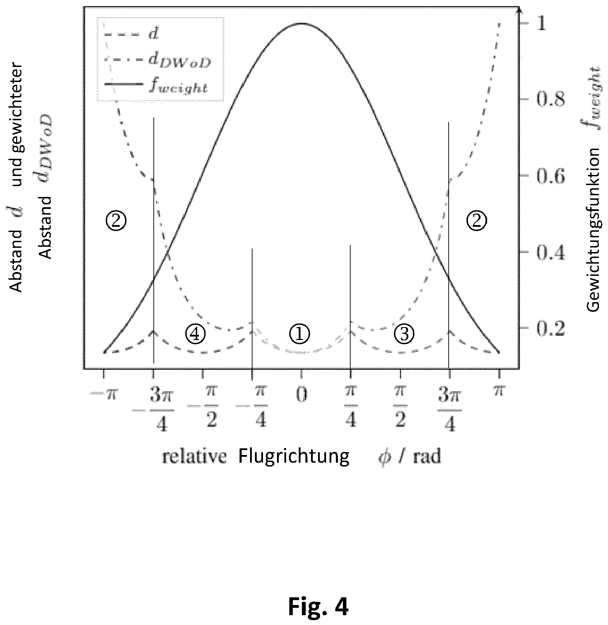

Figur 4 zeigt eine mögliche Vorgehensweise dazu, bei der die euklidischen Distanzen *d* zu jeder Rechteckkante ① bis ④ (des Geocages 2 in Figur 3) als stückweise kontinuierliche Funktion des (Richtungs-) Winkels *ϕ* zwischen der Flugrichtung (FR; Figur 3) und einem jeweiligen Kantenpunkt (Richtungswinkel) beschrieben wird. Die resultierenden Abstandsfunktionen *d* werden mit einer Gewichtungsfunktion *f_{weight}* skaliert, welche die Wahrscheinlichkeit einer abrupten Richtungsänderung als Funktion des Richtungswinkels *ϕ* abbildet. Daraus ergeben sich neue Distanzwerte, die sowohl die euklidische Distanz berücksichtigen als auch die Wahrscheinlichkeit, dass der Geocage am jeweiligen Kantenpunkt verletzt wird.

In Figur 4 sind an der Abszisse die relativen Flugrichtungen als Winkel *ϕ* bezogen auf die Rechteckkanten ① bis ④ gemäß Figur 3 in Radian aufgetragen (gestrichelte Linie *d*)*.* Die durchgezogene Linie stellt die Gewichtungsfunktion *f_{weight}* dar, vorliegend ohne Beschränkung eine einfache Gauß'sche Glockenkurve. Die strichpunktierte Linie gibt die mit der Gewichtungsfunktion skalierten Abstandsfunktionen an, woraus sich die bereits erwähnten neuen Distanzwerte *d_{DW∘D}* ergeben.

Um zu überprüfen, ob das Fluggerät zu nahe an einer Grenze ist, insbesondere an der harten Grenze, müssen auch für diese Methode *d_{cont}* und *dᵣᵢₛₖ* bestimmt werden (vgl. Figur 2). Eine mögliche Implementierung kann umfassen, die analytische Beschreibung der Distanz d bzw. der gewichteten Distanz *d_{DW∘D}* nach einem Minimum abzusuchen und zu vergleichen, ob die erforderlichen Abstände *d_{cont}* und *dᵣᵢₛₖ* (vgl. Figur 2) eingehalten werden.

Der unter den getroffenen Annahmen für die Einhaltung des Geocages kritische Punkt muss nicht zwangsläufig mit dem Punkte des geometrisch geringsten Abstandes übereinstimmen. Dies ist insbesondere der Fall, wenn der Punkt des geringsten Abstandes entgegen der Flugrichtung liegt (vgl. Kante ② in Figur 3).

Bei der in Figur 4 gezeigten Gewichtungsfunktion handelt es sich exemplarisch um eine Gauß'sche Glockenkurve, worauf schon hingewiesen wurde, während in einer bevorzugten Implementierung empirische Daten zur Herleitung einer geeigneten Gewichtungsfunktion verwendet werden können, welche Daten die physikalischen Fähigkeiten des betreffenden Fluggeräts zu einer Richtungsänderung im Extremfall abbilden bzw. berücksichtigen. Die auf Basis der Flugrichtung FR gewichtete Distanz *d_{DW∘D}* zu den Flugbereichsgrenzen dient dann vorzugsweise als Grundlage für die Entscheidung über die Einleitung von Maßnahmen, welche Entscheidung bevorzugt automatisiert durch die schon erwähnte rechnergestützte Flugbahnsteuerungseinheit an Bord des Fluggeräts und/oder durch die externe (bodengestützte), rechnergestützte Flugbahnsteuerungseinheit getroffen wird.

## Patentansprüche

1. Verfahren zur Flugbahnsteuerung bei einem Fluggerät (1), insbesondere einem unbemannten Fluggerät (1), bei dem Grenzen eines für eine Mission des Fluggeräts (1) freigegebenen Luftraums bestimmt werden, welche Grenzen
a) zumindest eine harte Grenze (4a) umfassen, die einen für das Fluggerät (1) verbotenen Bereich begrenzt, sowie zusätzlich
b1) eine Warngrenze (2a), bei deren Erreichen durch das Fluggerät (1) Sicherheitsmaßnahmen eingeleitet werden, und/oder
b2) eine weiche Grenze (3a), bei deren Erreichen durch das Fluggerät (1) Notfallmaßnahmen eingeleitet werden,
**dadurch gekennzeichnet, dass**
zur Berechnung einer Lage der Warngrenze (2a) und/oder der weichen Grenze (3a), vorzugsweise ausgehend von der harten Grenze (4a), Parameter eines tatsächlichen Flugzustandes des Fluggeräts (1), wie eine aktuelle Geschwindigkeit, eine aktuelle Flughöhe, ein aktueller Bahnwinkel (ϕ) oder andere aktuelle Faktoren, insbesondere Umweltfaktoren, z.B. Wind- und/oder Wetterbedingungen, durch eine rechnergestützte Flugbahnsteuerungseinheit des Fluggeräts (1) und/oder durch eine externe, rechnergestützte Flugbahnsteuerungseinheit laufend ermittelt und dynamisch berücksichtigt werden; und
anschließend durch die rechnergestützte Flugbahnsteuerungseinheit des Fluggeräts (1) und/oder durch die externe, rechnergestützte Flugbahnsteuerungseinheit überprüft wird, ob das Fluggerät (1) an seiner aktuellen Position mit den genannten Parametern gegenwärtig oder zukünftig wenigstens eine der genannten Grenzen (2a-4a) verletzt.

2. Verfahren nach Anspruch 1, bei dem ein Abstand (*dᵣᵢₛₖ*) zwischen der harten Grenze (4a) und der weichen Grenze (3a) und/oder ein Abstand (*d_{cont}*) zwischen der weichen Grenze (3a) und der Warngrenze (2a) an einem Ort innerhalb des Luftraums dynamisch von einer aktuellen Geschwindigkeit des Fluggeräts (1) abhängt.

3. Verfahren nach Anspruch 2, bei dem der Abstand (*d_{cont},dᵣᵢₛₖ*) mit zunehmender aktueller Geschwindigkeit des Fluggeräts (1) größer wird.

4. Verfahren nach einem der Ansprüche 1 bis 3, bei dem ein Abstand (*dᵣᵢₛₖ*) zwischen der harten Grenze (4a) und der weichen Grenze (3a) und/oder ein Abstand (*d_{cont}*) zwischen der weichen Grenze (3a) und der Warngrenze (2a) an einem Ort innerhalb des Luftraums dynamisch von einer aktuellen Flugrichtung des Fluggeräts (1) relativ zu den genannten Grenzen (2a-4a) abhängt.

5. Verfahren nach Anspruch 4, bei dem Grenzen (2a, 3a), die in Flugrichtung (FR) liegen, in einem größeren Abstand von einem aktuellen Ort des Fluggeräts (1) gesetzt werden als Grenzen (2a, 3a), die parallel oder entgegen der Flugrichtung (FR) liegen.

6. Verfahren nach einem der Ansprüche 1 bis 5, bei dem die Grenzen (2a-4a) festgelegt werden, indem:
i) zunächst ein Verlauf der harten Grenze (4a) festgelegt wird;
ii) dann abhängig von dem Flugzustand und vorzugsweise zusätzlich abhängig von Umweltfaktoren Distanzen *d_{cont}* und *dᵣᵢₛₖ* berechnet werden;
iii) dann ein Verlauf der weichen Grenze (3a) und der Warngrenze (2a) festgelegt werden, indem ein Verlauf der harten Grenze (4a) zum Festlegen der weichen Grenze (3a) in einem Abstand *dᵣᵢₛₖ* reproduziert wird und ein Verlauf der weichen Grenze (3a) zum Festlegen der Warngrenze (2a) in einem Abstand *d_{cont}* reproduziert wird.

7. Verfahren nach einem der Ansprüche 1 bis 6, bei dem eine Wahrscheinlichkeit der Verletzung einer Grenze (2a-4a) an einem bestimmten Punkt durch das Fluggerät (1) berechnet wird, indem eine Winkeldifferenz (ϕ) zwischen der betreffenden Grenze (2a-4a) und einer aktuellen Flugrichtung (FR) des Fluggeräts (1) berücksichtigt wird, wobei die Wahrscheinlichkeit mit zunehmender Winkeldifferenz (ϕ) zur aktuellen Flugrichtung (FR) abnimmt, welche Wahrscheinlichkeit zur dynamischen Berechnung einer Lage der Warngrenze (2a) und/oder der weichen Grenze (3a) verwendet wird.

8. Verfahren nach Anspruch 7, bei dem zur Berechnung der Grenzen (2a, 3a) eine euklidische Distanz (*d*) zu einem geradlinigen Grenzabschnitt als eine stückweise kontinuierliche Funktion eines Richtungswinkels (ϕ) zwischen der aktuellen Flugrichtung (FR) und einem jeweiligen Punkt auf dem Grenzabschnitt beschrieben wird, wobei die resultierenden Abstandsfunktionen mit einer Gewichtungsfunktion (*f_{weight}*) skaliert werden, welche Gewichtungsfunktion (*f_{weight}*) die Wahrscheinlichkeit einer abrupten Richtungsänderung des Fluggeräts (1) als Funktion des Richtungswinkels (ϕ) abbildet, woraus sich neue Distanzwerte (*d*_{*DW*∘*D*}) ergeben, die sowohl die euklidische Distanz (*d*) als auch die Wahrscheinlichkeit, dass die Grenze (2a, 3a) an dem jeweiligen Punkt verletzt wird, berücksichtigen.

9. Verfahren nach Anspruch 8 bei Rückbezug auf Anspruch 6, bei dem die neuen Distanzwerte (*d*_{*DW*∘*D*}) nach einem Minimum abgesucht werden und dann dieses Minimum mit den Distanzen *d_{cont}* und *dᵣᵢₛₖ* verglichen wird.

10. Verfahren nach Anspruch 8 oder 9, bei dem als Gewichtungsfunktion (*f_{weight}*) eine Gauß'sche Glockenkurve verwendet wird.

11. Verfahren nach Anspruch 8 oder 9, bei dem die Gewichtungsfunktion (*f_{weight}*) auf der Grundlage empirischer Daten hergeleitet wird, welche Daten physikalische Fähigkeiten des Fluggeräts (1) zur Richtungsänderung im Extremfall abbilden.

12. Verfahren nach einem der Ansprüche 8 bis 11, bei dem die auf Basis der Flugrichtung (FR) gewichtete Distanz (*d*_{*DW*∘*D*}) zu den Grenzen (2a-4a) als Grundlage für eine Entscheidung über die Einleitung von Steuerungsmaßnahmen für das Fluggerät (1) verwendet wird.

13. Flugbahnsteuerungssystem bei einem Fluggerät (1), insbesondere einem unbemannten Fluggerät (1), welches Flugbahnsteuerungssystem dazu ausgebildet ist, Grenzen (2a-4a) eines für eine Mission des Fluggeräts (1) freigegebenen Luftraums zu bestimmen, welche Grenzen
a) zumindest eine harte Grenze (4a) umfassen, die einen für den Fluggerät (1) verbotenen Bereich begrenzt, sowie zusätzlich
b1) eine Warngrenze (2a), bei deren Erreichen durch das Fluggerät (1) Sicherheitsmaßnahmen eingeleitet werden, und/oder
b2) eine weiche Grenze (3a), bei deren Erreichen durch das Fluggerät (1) Notfallmaßnahmen eingeleitet werden,
**dadurch gekennzeichnet, dass**
das Flugbahnsteuerungssystem dazu ausgebildet ist, zur Berechnung einer Lage der Warngrenze (2a) und/oder der weichen Grenze (3a), vorzugsweise ausgehend von der harten Grenze (4a), Parameter eines tatsächlichen Flugzustandes des Fluggeräts (1), wie eine aktuelle Geschwindigkeit, eine aktuelle Flughöhe, ein aktueller Bahnwinkel oder andere aktuelle Faktoren, insbesondere Umweltfaktoren, z.B. Wind- und/oder Wetterbedingungen, insbesondere durch eine rechnergestützte Flugbahnsteuerungseinheit des Fluggeräts (1) und/oder durch eine externe, rechnergestützte Flugbahnsteuerungseinheit laufend zu ermitteln und dynamisch zu berücksichtigen; und
das Flugbahnsteuerungssystem weiterhin dazu ausgebildet ist, insbesondere durch die rechnergestützte Flugbahnsteuerungseinheit des Fluggeräts (1) und/oder durch die externe, rechnergestützte Flugbahnsteuerungseinheit, zu überprüfen, ob das Fluggerät (1) an seiner aktuellen Position mit den genannten Parametern gegenwärtig oder zukünftig wenigstens eine der genannten Grenzen (2a-4a) verletzt und bei Bedarf entsprechende Steuerungsmaßnahmen für das Fluggerät (1) einzuleiten.

14. Flugbahnsteuerungssystem nach Anspruch 13, weiterhin ausgebildet zur Durchführung des Verfahrens nach einem der Ansprüche 2 bis 12.

15. Fluggerät (1), gesteuert mittels eines Verfahrens nach einem der Ansprüche 1 bis 12 und/oder mit einem Flugbahnsteuerungssystem nach Anspruch 13 oder 14.
